# EUROPEAN PATENT APPLICATION

(11) **EP 3 951 934 A1**
(43) Date of publication of application: **09.02.2022**
(21) Application number: 20779420.7
(22) Date of filing: 26.02.2020
(51) Int. Cl.: H01M 4/131, H01M 4/36, H01M 4/525, H01M 4/62, C04B 35/01

(54) **LITHIUM COMPOSITE OXIDE SINTERED BODY PLATE**

(30) Priority: 26.03.2019 JP 2019058678
(71) Applicant: NGK Insulators, Ltd., Nagoya-shi, Aichi 467-8530 (JP)
(72) Inventor: MORISAKI, Nobuhiro, Nagoya-shi, Aichi 467-8530 (JP); YURA, Yukinobu, Nagoya-shi, Aichi 467-8530 (JP); OHIRA, Naoto, Nagoya-shi, Aichi 467-8530 (JP); NAKASHIMA, Eiji, Nagoya-shi, Aichi 467-8530 (JP); OISHI, Kengo, Nagoya-shi, Aichi 467-8530 (JP)
(74) Representative: Müller-Boré & Partner Patentanwälte PartG mbB
(86) International application number: PCT/JP2020/007557
(87) International publication number: WO 2020/195463

(57) **Abstract**

A lithium composite oxide sintered body plate includes a porous structure in which a plurality of primary particles of a lithium composite oxide having a layered rock-salt structure are bonded is included, in which a porosity is 15 to 50%, a ratio of the primary particles whose average inclination angle being an average value of angles between a (003) plane of the plurality of primary particles and a plate surface of the sintered body plate is more than 0° and 30° or less is 60% or more, one or more additive elements selected from Nb, Ti, W are contained, and an addition amount of the one or more additive elements to an entire of the sintered body plate is 0.01 wt% or more and 2.0 wt% or less.

## Description

### Technical Field

The present invention relates to a sintered body plate of a lithium composite oxide, and particularly to a sintered body plate used for a positive electrode of a lithium secondary battery.

### Background Art

A lithium secondary battery (lithium ion secondary battery) in which a sintered body plate of a lithium composite oxide is used for the positive electrode (positive electrode plate) for the purpose of increasing the capacity and increasing the charge/discharge efficiency has already been known (for example, Patent Document 1). The use of such a sintered body plate for the positive electrode is advantageous in that the packing density of the lithium composite oxide as a positive electrode active material is high compared to the case of using a so-called powder dispersion type positive electrode formed by kneading lithium composite oxide powder with an additive such as binder or a conductive agent.

Patent Document 1 discloses a lithium composite oxide sintered body plate that exhibits excellent quick charging performance when used as a positive electrode while having high energy density, which is obtained by orienting the (0003) plane of the primary particles of a lithium composite oxide having a layered rock-salt structure at an angle of 30° or less.

In recent years, demands for miniaturized and thin batteries have been arising for smart cards and wearable devices. The lithium secondary battery disclosed in Patent Document 1 using the lithium composite oxide sintered body plate as the positive electrode plate was invented to meet such demands, however, due to its high reaction resistance during charging and discharging, a large voltage drop might possibly occur when a large current pulse discharge is performed. Therefore, there are some cases that a sufficient voltage cannot possibly be obtained to drive the circuit.

Also, when the lithium secondary battery disclosed in Patent Document 1 is held at a high temperature in a state of charging (for example, when a high temperature storage acceleration test at 60°C is conducted), a large amount of gas is generated and the performance deteriorates in terms of resistance and capacity.

### Prior Art Documents

### Patent Documents

[Patent Document 1] Japanese Patent No. 6374634

### Summary

The present invention has been made in view of the above problems, and an object thereof is to provide a lithium composite oxide sintered body plate in which the reaction resistance during charging and discharging is suppressed and gas generation is suppressed when used as a positive electrode plate of a lithium secondary battery.

In order to solve the above problems, a lithium composite oxide sintered body plate according to a first aspect of the present invention used for a positive electrode of a lithium secondary battery comprises a porous structure in which a plurality of primary particles of a lithium composite oxide having a layered rock-salt structure are bonded, and a porosity thereof is 15 to 50%. A ratio of the primary particles whose inclination angle between a (003) plane of the plurality of primary particles and a plate surface of the lithium composite oxide sintered body plate is more than 0° and 30° or less is 60% or more. The lithium composite oxide sintered body plate contains one or more additive elements selected from Nb, Ti, and W. An addition amount of the one or more additive elements to an entire of the lithium composite oxide sintered body plate is 0.01 wt% or more and 2.0 wt% or less.

According to a second aspect of the present invention, in the lithium composite oxide sintered body plate according to the first aspect, a normalized addition amount being a ratio of the addition amount of the one or more additive elements to a specific surface area of the lithium composite oxide sintered body plate is more than 0 wt%·g/m² and 1.5 wt%·g/m² or less.

According to a third aspect of the present invention, in the lithium composite oxide sintered body plate according to the first or second aspect, there exists a crystal phase containing the one or more additive elements and having lower electron conductivity than that of a composite oxide while having lithium ion conductivity, in at least a part of a surface of the primary particles constituting the plate surface and a surface for defining open pores of the lithium composite oxide sintered body plate.

According to a fourth aspect of the present invention, in the lithium composite oxide sintered body plate according to the first or second aspect, there exists a crystal phase containing the one or more additive elements and having lower electron conductivity than that of a composite oxide while having lithium ion conductivity, in at least a part of a surface of the primary particles, the surface of the primary particles constituting a contact surface of the lithium composite oxide sintered body plate with an electrolytic solution when the lithium composite oxide sintered body plate is used as the positive electrode of the lithium secondary battery.

According to a fifth aspect of the present invention, in the lithium composite oxide sintered body plate according to any one of the first to fourth aspect, the additive element is Nb, and the lithium composite oxide is LiCoO₂.

According to a sixth aspect of the present invention, in the lithium composite oxide sintered body plate according to any one of the first to fourth aspect, the additive element is Ti, and the lithium composite oxide is LiCoO₂.

According to the first to sixth aspects of the present invention, the lithium composite oxide sintered body plate is realized that exhibits the further effect of reducing reaction resistance and suppressing gas generation during charging and discharging, when incorporated as a positive electrode in the lithium secondary battery, in addition to exhibiting the same effect as the conventional lithium composite oxide sintered body plate, such as excellent quick charging performance and cycle performance, suppressing the occurrence of peeling and cracking, and achieving high capacity.

### Brief Description of Drawings

[FIG. 1] A diagram schematically illustrating an internal structure of an additive-added sintered body plate 1.
[FIG. 2] A graph illustrating a gas generation amount profile for Example 3.
[FIG. 3] A graph illustrating a gas generation amount profile for Comparative Example 1.
[FIG. 4] A graph illustrating plotting of reaction resistance with respect to normalized addition amounts for LiCoO₂ sintered body plates of Examples 1 to 10 and Comparative Example 1.

### Description of Embodiments

### <Parameter Definition and Evaluation Method>

The definitions of the parameters regarding to the properties of a lithium composite oxide sintered body plate used in the present specification will be described below.

In the present specification, the "primary particle size" is the average particle size of a plurality of primary particles constituting the lithium composite oxide sintered body plate.

In the present specification, an "inclination angle of the primary particles" represents an angle formed by the (003) plane of the primary particles of the lithium composite oxide sintered body plate and the plate surface of the lithium composite oxide sintered body plate, an "average inclination angle of the primary particles" represents an average value of the "inclination angles of the primary particles".

In the present specification, the "porosity" represents the volume ratio (unit: %) of pores to the volume (apparent volume) of the lithium composite oxide sintered body plate. The pores include open pores that communicate with the outside of the lithium composite oxide sintered body plate and closed pores that are closed inside the lithium composite oxide sintered body plate.

In the present specification, the "average pore diameter" represents an average value of the diameters of pores contained in the lithium composite oxide sintered body plate. The "diameter" of a pore is typically envisaged as the diameter in the sphere, assuming the pore is a sphere with the same volume or the same cross-sectional area. Further, the suitable calculation for the "average pore diameter" being the "average value" of the pore diameters is performed on the basis of the number of pores.

In the present specification, the "open pore ratio" represents a ratio (% by volume) of the total volume of open pores to the total volume of all pores (open pores and closed pores) contained in the lithium composite oxide sintered body plate. The open pore ratio can be obtained from the closed porosity and the total porosity by the following calculation.

### (open pore ratio)=[(total porosity)-(closed porosity)]/(total porosity)

Here, the total porosity (% by volume) and the closed porosity (% by volume) can be measured by using the Archimedes method or the like. For example, the closed porosity can be obtained from the apparent density measured by the Archimedes method, and the total porosity can be obtained from the bulk density measured by the Archimedes method.

As used in the present specification, the "aspect ratio" of the pores represents the ratio of the length in the longitudinal direction of the pores to the length in the transverse direction of the pores contained in the lithium composite oxide sintered body plate.

Among the above parameters, the primary particle size, porosity, and pore aspect ratio can be obtained by a predetermined image analysis of a cross-sectional scanning electron microscope (SEM) image of the lithium composite oxide sintered body plate. The cross-section SEM image is, for example, obtained by observing or imaging a polished cross-section of a lithium composite oxide sintered body plate, having been exposed by processing with a cross-section polisher (CP), at a predetermined magnification (for example, 1000 times) and a predetermined field of view (125 µm × 125 µm).

More specifically, the primary particle size can be obtained as the average value of diameters of the circumscribed circles when circumscribed circles are drawn for all the primary particles in the SEM image of the polished cross section in which 20 or more primary particles are present in the field of view.

The porosity can be obtained as a percentage of the area of all pores in the SEM image of the polished cross section to the area (cross-sectional area) of the sintered body plate.

The aspect ratio of the pores can be obtained for the pores identified in the binarized image obtained by binarizing the SEM image of the polished cross section.

The inclination angle of the primary particles can be determined by analyzing an electron backscatter diffraction (EBSD) image of the cross section of the lithium composite oxide sintered body plate. The EBSD image is obtained by observing or imaging a polished cross-section of a lithium composite oxide sintered body plate, having been exposed by processing with a cross-section polisher (CP), at a predetermined magnification (for example, 1000 times) and a predetermined field of view (for example, 125 µm × 125 µm). In the EBSD image, the magnitude of the inclination angle of the primary particles is expressed by the shade of color, and the darker the color, the smaller the inclination angle. From the EBSD image, the inclination angle of each primary particle can be learned.

The average pore diameter is preferably measured by a known mercury intrusion technique using a mercury porosimeter. Alternatively, the average pore diameter may be obtained by a known methods like image analysis of a cross-sectional SEM image as described above.

### <First Embodiment

### <<Lithium Composite Oxide Sintered Body Plate>>

Next, a lithium composite oxide sintered body plate according to the first embodiment of the present invention will be described. The lithium composite oxide sintered body plate according to the present embodiment is roughly a plate-shaped sintered body in which a plurality of (that is, a large number of) primary particles of a lithium composite oxide having a layered rock-salt structure are bonded. The lithium composite oxide sintered body plate is also a porous body having a large number of pores with a porosity of 15% to 50%. Hereinafter, the lithium composite oxide sintered body plate according to the present embodiment may simply be referred to as a lithium composite oxide sintered body plate.

Further, the lithium composite oxide sintered body plate is used as a positive electrode or a positive electrode active material layer of a lithium secondary battery (lithium ion secondary battery). Therefore, in the following description, the effect that should be regarded as those of the lithium secondary battery in which the lithium composite oxide sintered body plate is used as a positive electrode or a positive electrode active material layer originally, such as charge/discharge performance, may be described as the effect of the lithium composite oxide sintered body plate without particular notice.

The lithium composite oxide is typically an oxide represented by LiₓMO₂. (0.05<x<1.10 and M is at least one transition metal, for example one or more transition metals selected from Co, Ni and Mn). A typical lithium composite oxide has a layered rock-salt structure. The layered rock-salt structure refers to a crystal structure in which a lithium layer and a transition metal layer other than lithium are alternately laminated with an oxygen layer in between. That is, the layered rock-salt structure is a crystal structure in which transition metal ion layers and lithium single layers are alternately laminated via oxide ions (typically α-NaFeO₂ type structure: a structure in which transition metals and lithium are regularly arranged in the [111] axis direction of a cubic rock salt type structure).

Examples of the lithium composite oxide having a layered rock-salt structure that can be used as a constituent material of the lithium composite oxide sintered body plate include lithium cobalt oxide LiₚCoO₂ (1≤p≤1.1), lithium nickelate LiNiO₂, lithium manganate Li₂MnO₃, lithium nickel manganate Liₚ (Ni_{0.5}, Mn_{0.5}) O₂, a solid solution represented by a general equation: Liₚ (Coₓ, Ni_{y}, Mn_{z}) O₂ (0.97≤p≤1.07, x+y+z=1), a solid solution represented by Liₚ (Coₓ, Ni_{y}, Al_{z}) O₂ (0.97≤p≤1.07, x+y+z=1, 0 <x≤0.25, 0.6≤y≤0.9 and 0<z≤0.1), and a solid solution of Li₂MnO₃ and LiMO₂ (M is a transition metal such as Co, Ni, etc.). Preferably, the lithium composite oxide is lithium cobalt oxide LiₚCoO₂ (1≤p≤1.1), for example LiCoO₂.

Further, the lithium composite oxide constituting the lithium composite oxide sintered body plate contains one or a plurality of types of additive elements selected from Nb, Ti, and W. The addition amount of the additive element is 0.01 wt% or more and 2.0 wt% or less with respect to the entire of lithium composite oxide sintered body plate. Therefore, hereinafter, the lithium composite oxide sintered body plate according to the present embodiment will also be referred to as an additive-added sintered body plate. It should be noted that, in the present specification, the addition amount is shown as an internal addition amount unless otherwise specified.

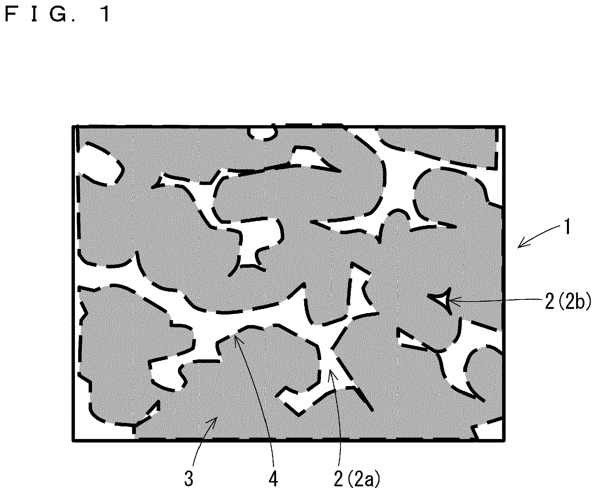

The additive element is mainly present in the vicinity of the surface of the crystal particles of the lithium composite oxide in the additive-added sintered body plate. Further, at least a part of the additive element may be present as a reactional phase with the lithium composite oxide, for example, in a manner of partially or wholly covering the surface of the primary particles of the lithium composite oxide. FIG. 1 is a diagram schematically illustrating an internal structure of an additive-added sintered body plate 1 in such a case. In FIG. 1, a state is illustrated in which the surface of the lithium composite oxide crystal particles 3 facing the pores 2 (open pores 2a and closed pores 2b) is continuously or intermittently covered with the reactional phase 4 of the additive element and the lithium composite oxide. The presence of such a reactional phase can be confirmed, in principle (for example, when more than the detection limit is present), based on the results (peak profile) of the X-ray diffraction (XRD) measurement (θ/2θ measurement) for the additive-added sintered body plate.

For example, when the lithium composite oxide is LiCoO₂ and the additive element is Nb, Nb is mainly present on the surface of the primary particles as a lithium salt such as Li₃NbO₄ or LiNbO₃. Details regarding the addition of additive elements will be described later.

Further, in the additive-added sintered body plate, the ratio of the primary particles having the inclination angles exceeding 0° and 30° or less with respect to the plurality of primary particles is 60% or more. Preferably, the ratio of the primary particles having the inclination angles exceeding 0° and 30° or less with respect to the plurality of primary particles is 70% or more. More preferably, the ratio of the primary particles having the inclination angles exceeding 0° and 30° or less with respect to the plurality of primary particles is 80% or more. The upper limit of the latter is not particularly limited and may be 100%. In other words, in the additive-added sintered body plate according to the present embodiment, the (003) plane of the primary particles is oriented with respect to the plate surface under the state where these ranges are satisfied. The provision of such an orientation state has the effect of more preferably dispersing the stress at the time of charging and discharging, and further improving the performance such as quick charging performance. Therefore, the additive-added sintered body plate according to the present embodiment exhibits excellent performance such as quick charging performance when incorporated as a positive electrode in a lithium secondary battery while having high energy density.

For example, in the additive-added sintered body plate, deterioration of battery performance is prevented or suppressed even if a charge/discharge cycle test is conducted at a high rate (2C). It is presumed that this is because the stress that might be generated due to expansion and contraction during charging and discharging is conveniently suppressed by the gradient orientation of the primary particles at the above-mentioned average inclination angle. Such properties are suitable for using the additive-added sintered body plate as a positive electrode or a positive electrode active material layer for a miniaturized battery.

The primary particle size, which is the average particle size of the plurality of primary particles constituting the additive-added sintered body plate, is 20 µm or less, preferably 15 µm or less.

Generally, the smaller the primary particle size, the larger the number of grain boundaries, and the larger the number of grain boundaries, the more favorably the internal stress generated during expansion and contraction of the crystal lattice accompanying the charge/discharge cycle is dispersed. Further, the larger the number of grain boundaries, the more favorably the crack extension is suppressed when cracks occur.

On the other hand, in the additive-added sintered body plate according to the present embodiment, the orientation directions of the primary particles are aligned; therefore, stress is less likely to be applied to the grain boundaries, and even when the primary particle size exceeds 10 µm, excellent cycle performance is exhibited.

Additionally, in the case of the additive-added sintered body plate, the particle size of the primary particles is large; therefore, the diffusion of lithium during charging and discharging is less likely to be blocked by the grain boundaries. This is preferable in realizing quick charging/discharging. In the additive-added sintered body plate according to the present embodiment, the primary particle size is typically 0.2 µm or more, and more typically 0.4 µm or more.

Further, as described above, the additive-added sintered body plate is also a porous body containing a large number of pores. Generally, in the positive electrode of a lithium secondary battery, stress is generated due to expansion and contraction of the crystal lattice due to the ingress and egress of lithium ions in the charge/discharge cycle, and this might change the shape of the positive electrode (volume might expand and contract), however, in the case that the additive-added sintered body plate according to the present embodiment is used as a positive electrode or a positive electrode active material layer, the stress is released in the pores. Accordingly, the occurrence of grain boundary cracks due to repeated charge/discharge cycles is suppressed as much as possible. Therefore, it is preferable that the lithium composite oxide sintered body plate is a porous body containing a large number of pores in terms of increasing the capacity while maintaining favorable cycle performance.

Although the porosity of the additive-added sintered body plate needs only be 15% to 50%, more preferably it should be 30% to 50%. The porosity being less than 3% is not preferable because the stress release effect by the pores is insufficient. Further, if the porosity exceeds 50%, the effect of increased the capacity is significantly diminished, which is not preferable.

More specifically, the open pore ratio of the additive-added sintered body plate is 70% or more, preferably 80% or more, and further preferably 90% or more. The open pore ratio may be 100%, typically be 90% or less, and more typically be 80% or less.

The expansion and contraction of the volume at the positive electrode is caused by the ingress and egress of lithium ions in the crystal lattice of the lithium composite oxide, and the open pores, which are pores communicating with the outside, are more effective in releasing stress associated with expansion and contraction of the crystal lattice compared to closed pores closed inside the additive-added sintered body plate. In the additive-added sintered body plate, the ratio of open pores is 70% or more; therefore, a structure in which stress is more likely to be released is realized, and therefore the occurrence of grain boundary cracks is effectively suppressed.

Further, when the lithium composite oxide sintered body plate is used as the positive electrode or the positive electrode active material layer of the lithium secondary battery, one main surface thereof is bonded to the conductive bonding layer. In the additive-added sintered body plate according to the present embodiment, the open pore ratio on the surface serving as the bonding surface is high, and thus, the anchor effect preferably acts with the conductive bonding layer. As a result, the bonding strength therebetween is suitably secured, and further, the occurrence of bonding interface peeling due to the above-mentioned shape change (expansion/contraction of volume) is also satisfactorily suppressed.

Furthermore, when the lithium composite oxide sintered body plate is used as the positive electrode or positive electrode active material layer of the lithium secondary battery, an electrolyte not only comes into contact with the primary particles of the lithium composite oxide forming the plate surface of the lithium composite oxide sintered body plate, but also penetrates into the open pores (for example, the open pores 2a illustrated in FIG. 1) and comes into contact with the surface of the primary particles partitioning the open pores. That is, in the lithium composite oxide sintered body plate, the wall surface of the open pores provided inside also favorably functions as a surface through which lithium ions enter and exit. In the additive-added sintered body plate according to the present embodiment, the open pore ratio is 70% or more, so that excellent rate characteristics are realized compared to the case where the ratio of the closed pores (for example, the closed pores 2b illustrated in FIG. 1) present as simple pores that do not contribute to charging/discharging is high. The high open pore ratio also means that the specific surface area of the added sintered body plate, which indicates the total area of the portions actually in contact with the electrolyte, is large.

The distribution and shape of the pores in the additive-added sintered body plate are not particularly limited. However, there is a preferable state regarding the shape and distribution of the pores as well since the lithium composite oxide particles are oriented as described above and have predetermined aspect ratios. For example, the pores may exist so as to be in contact with the lithium ion conducting surface, or may have a shape (such as a spherical shape or an amorphous shape) that can be largely contacted with the lithium ion conducting surface. Thus, it is preferable that the pores exhibit anisotropy so as to have an aspect ratio that brings such existence form or shape. In such a case, a lithium composite oxide sintered body plate having excellent bending resistance, quick charging performance, and the like, in which the stress at the time of bending and the stress at the time of charging/discharging are conveniently dispersed by the existence of pores, is realized.

The average pore diameter of the additive-added sintered body plate is 15 µm or less, preferably 12 µm or less, and more preferably 10 µm or less. When the average pore diameter exceeds 15 µm, relatively large pores (coarse air pores) are likely to be formed. Coarse air pores typically have a distorted shape rather than a clean sphere. Therefore, local stress concentration is likely to occur in the coarse air pores. In such a case, it becomes difficult to obtain the effect of uniformly releasing stress inside the additive-added sintered body plate. Although, the lower limit of the average pore diameter is not particularly limited, from the viewpoint of the stress release effect by the pores, the average pore diameter is preferably 0.1 µm or more, and further preferably 0.3 µm or more. In such a case, the occurrence of grain boundary cracks and the peeling of the bonding interface are satisfactorily suppressed.

The additive-added sintered body plate has a thickness of 15 µm to 200 µm, preferably 30 µm to 150 µm, and more preferably 50 µm to 100 µm. The larger the thickness of the additive-added sintered body plate, the easier it is to realize a battery having a high capacity and a high energy density. The thickness of the additive-added sintered body plate can be obtained, for example, by measuring the distance between the plate surfaces observed substantially in parallel when the cross section of the additive-added sintered body plate is observed by a scanning electron microscope (SEM).

### «Effect of Additive Elements»

As described above, the crystal particles (primary particles) of the lithium composite oxide constituting the additive-added sintered body plate contain one or a plurality of types of additive elements selected from Nb, Ti, and W. The addition amount of the additive elements added to the entire additive-added sintered body plate is 0.01 wt% or more and 2.0 wt% or less.

In the lithium secondary battery using the additive-added sintered body plate as the positive electrode or the positive electrode active material layer, the reaction resistance during charging and discharging is reduced compared to the lithium secondary battery using the conventional lithium composite oxide sintered body plate not containing the additive elements. This is considered as the effect of following: a crystal phase (for example, a lithium salt such as Li₃NbO₄ or LiNbO₃) having lithium ion conductivity but lower electron conductivity than a lithium composite oxide covers at least a part of the surface of the primary particles of the lithium composite oxide constituting the plate surface and the surface defining the open pores in the lithium composite oxide sintered body plate, as in the reactional phase 4 covering the crystal particles (primary particles) 3 in FIG. 1, so that electrical repulsive force generated during the insertion and desorption of lithium ions is suppressed.

Further, in the lithium secondary battery using such an additive-added sintered body plate as the positive electrode or the positive electrode active material layer, the gas generation during charging and discharging is suppressed compared to the lithium secondary battery using the lithium composite oxide sintered body plate not containing the additive elements. This is the effect by that the crystal phase with low electron conductivity covers the surface of the primary particles of the lithium composite oxide, so that the electrolytic solution is protected from the high potential of the positive electrode and the oxidative decomposition of the electrolytic solution is suppressed.

It should be noted that, the surface of the primary particles of the lithium composite oxide constituting the plate surface and the surface defining the open pores in the lithium composite oxide sintered body plate is, in other words, also referred to as a surface in contact with an electrolytic solution when the lithium composite oxide sintered body plate is used as a positive electrode in the lithium secondary battery.

That is, by adding one or a plurality of types of additive elements selected from Nb, Ti, and W in an addition amount of 0.01 wt% or more and 2.0 wt% or less, the additive-added sintered body plate according to the present embodiment further exhibits the effect of reducing reaction resistance and suppressing gas generation during charging and discharging, when incorporated as a positive electrode in the lithium secondary battery, in addition to exhibiting the same effect as the conventional lithium composite oxide sintered body plate, such as excellent quick charging performance and cycle performance, suppressing the occurrence of peeling and cracking, and achieving high capacity.

Furthermore, taking into consideration that the additive elements are mainly present near the surface of the primary particles of the lithium composite oxide and that, not only the primary particles forming the plate surface but also the primary particles defining the closed pores come into contact with the electrolyte, and lithium ions enter and exit on both surfaces, it is more preferable to understand the effect of reducing reaction resistance and suppressing gas generation during charging and discharging, with the relationship with the addition amount per specific surface area of the lithium composite oxide sintered body plate (hereinafter, normalized addition amount, unit: wt%·g/m²).

Specifically, if the normalized addition amount exceeds 0 wt%·g/m² and is 1.5 wt%·g/m² or less, the additive-added sintered body plate exhibits the further effect of reducing reaction resistance and suppressing gas generation during charging and discharging, when incorporated as a positive electrode in the lithium secondary battery, in addition to exhibiting the same effect as the conventional lithium composite oxide sintered body plate, such as excellent quick charging performance and cycle performance, suppressing the occurrence of peeling and cracking, and achieving high capacity.

### «Manufacturing Method of Lithium Composite Oxide Sintered Body Plate»

The additive-added sintered body plate according to the present embodiment may be manufactured by any method, and in the following, as an example thereof, a manufacturing method of an additive-added sintered body plate by a so-called green sheet process will be described.

First, lithium composite oxide powder as a raw material powder is prepared. The raw material powder preferably contains synthetic plate-like particles (for example, LiCoO₂ plate-like particles) having a composition of LiMO₂ (M is at least one transition metal, as described above, for example one or more transition metals selected from Co, Ni, and Mn). The volume-based D50 particle size of the raw material powder is preferably 0.3 to 30 µm.

Further, an oxide powder of one or a plurality of types of additive elements selected from Nb, Ti, and W is added to the raw material powder such that the addition amount of the additive elements with respect to the whole is 0.01 wt% to 2.0 wt%.

For example, the production of the LiCoO₂ plate-like particles to which Nb has been added is produced by the following procedure. First, Co₃O₄ powder and Li₂CO₃ powder are mixed and calcined at 500°C to 900°C for 1 to 20 hours to synthesize LiCoO₂ powder.

Next, the obtained LiCoO₂ powder is placed in a pot mill, and the powder of Nb₂O₅, being an oxide of Nb is added such that the addition amount of the additive element with respect to the whole is 0.1 wt% to 2.0 wt%, and then the powder is pulverized so that the volume-based D50 particle size is 0.2 µm to 10 µm.

By pulverization, plate-shaped LiCoO₂ particles capable of conducting lithium ions parallel to the plate surface can be obtained. On the surface of the LiCoO₂ particles, Nb added prior to pulverization is attached in a state of Nb₂O₅ or other states.

LiCoO₂ particles can also be obtained by various methods of synthesizing plate-like crystals such as a method of crushing a grain-grown green sheet using LiCoO₂ powder slurry, a flux method, hydrothermal synthesis, single crystal growth using a melt, and a sol-gel method, and the like. The LiCoO₂ particles obtained by any of these methods are in a state of being easily cleaved along the cleavage plane, plate-shaped LiCoO₂ particles can be easily obtained by cleaving through crushing.

The obtained plate-shaped particles may be used alone as a raw material powder, or a mixed powder with another powder (for example, Co₃O₄ particles) may be used as a raw material powder. In the latter case, it is preferable that the plate-shaped LiCoO₂ powder particles function as template particles for imparting orientation, and other raw material powders (for example, Co₃O₄ particles) function as matrix particles that can grow along the template particles. In this case, it is preferable to use a powder obtained by mixing template particles and matrix particles in a ratio of 100:0 to 3:97 as a raw material powder.

When the Co₃O₄ powder is used as the matrix particles, the volume-based D50 particle size of the Co₃O₄ powder is not particularly limited and can be, for example, 0.1 µm to 1.0 µm. However, it is preferably smaller than the volume-based D50 particle size of the LiCoO₂ template particles. The matrix particles can also be obtained by heat-treating the Co(OH)₂ raw material at 500°C to 800°C for 1 hour to 10 hours. Further, as the matrix particles, in addition to Co₃O₄, Co(OH)₂ particles may be used, or LiCoO₂ particles may be used.

When the raw material powder is composed of only LiCoO₂ template particles, or when LiCoO₂ particles are used as matrix particles, a large-sized (for example, 90 mm×90 mm square) and flat LiCoO₂ sintered body plate can be obtained by firing.

Next, the raw material powder of the lithium composite oxide containing the additive element is mixed with the dispersion medium and various additives (binder, plasticizer, dispersant, etc.) to form a slurry. A lithium compound other than LiMO₂ (for example, lithium carbonate) may be excessively added to the slurry in an amount of about 0.5 mol% to 30 mol% for the purpose of promoting grain growth or compensating for volatile matter during the firing step described later. It is desirable that no pore-forming material is added to the slurry. The slurry is preferably defoamed by stirring under reduced pressure and its viscosity adjusted to 4000 cP to 10000 cP. By molding the obtained slurry into a sheet, a lithium composite oxide-containing green sheet can be obtained.

Sheet molding is preferably performed using a molding method capable of applying a shearing force to plate-shaped particles (for example, template particles) in the raw material powder. Accordingly, the ratio of the primary particles having the inclination angles exceeding 0° and 30° or less is brought to 60% or more. The doctor blade method is suitable as a molding method capable of applying a shearing force to the plate-shaped particles. The thickness of the lithium composite oxide-containing green sheet may be appropriately set such that the thickness of the lithium composite oxide sintered body plate after firing is a predetermined value within the above-mentioned range of 15 µm to 200 µm.

At firing, the produced lithium composite oxide-containing green sheet (for example, LiCoO₂ green sheet) is placed on the lower setter, and the upper setter is placed thereon. The upper and lower setters are made of ceramics, preferably zirconia or magnesia. When the setters are made of magnesia, the pores tend to be smaller. The upper setter may have a porous structure, a honeycomb structure, or a dense structure. When the upper setter is dense, the pores in the sintered body plate tend to be small and the number of pores tends to be large.

Alternatively, prior to firing, the lithium composite oxide-containing green sheet (for example, LiCoO₂ green sheet) is placed on the lower setter, and this green sheet is debindered as desired, and then calcination may be performed at 600°C to 850°C for 1 to 10 hours. In this case, the upper setter needs only be placed on the obtained temporary calcined plate.

Then, the lithium composite oxide-containing green sheet or a temporary calcined plate is interposed between the upper and lower setters, and after debinding as desired, heat treatment (firing) is performed at a firing temperature in a medium temperature range (for example, 700°C to 1000°C). As a result, the additive-added sintered body plate containing an additive element on the surface of the primary particles constituting the plate surface and the surface for defining the open pores, which is a porous body satisfying the above-mentioned various requirements, can be obtained. This firing step may be performed in two steps or in one step. When firing in two steps, it is preferable that the firing temperature of the first firing is lower than the firing temperature of the second firing.

### <Second Embodiment

In the above-described embodiment, although the addition of one or a plurality of types of elements selected from Nb, Ti, and W is carried out by mixing the oxide powder of the additive element with the raw material powder of the lithium composite oxide, the method of adding additive elements is not limited thereto.

In the following, a method will be described with which to realize the addition of these additive elements in the additive-added sintered body plate by coating (sol-gel coating) of the additive element-containing phase on the surface of the primary particles using the sol-gel method, which is different from the first embodiment.

Specifically, a green sheet using the raw material powder is produced by the same procedure as in the first embodiment except that the oxide powder of the additive element is not added, and further, the green sheet is fired.

Then, the lithium composite oxide sintered body plate without any additive element (hereafter, additive-free sintered body plate) obtained thereby is allowed to stand still for predetermined time in a mixed solution containing an alkoxide of one or a plurality of types of elements to be added selected from Nb, Ti, and W. For example, when Nb is added, a mixed solution of niobium pentaethoxide mixed with an organic substance such as ethylhexanol and acetylacetone is used, when Ti is added, a mixed solution of tetra-n-butoxy titanium mixed with the organic substance is used, and when W is added, a mixed solution of tungsten pentaethoxide mixed with the organic substance is used.

By such still-standing, the mixed solution containing the alkoxide is impregnated into the open pores of the additive-free sintered body plate.

Then, the additive-free sintered body plate is taken out from the mixed solution, excess droplets on the plate surface are removed, placed it on the setter, and subject it to heat-treated at 300°C to 1000°C for 0.5 to 40 hours. More preferably, the heat treatment is performed at 400°C to 700°C for 1 to 10 hours.

By such a heat treatment, the organic component derived from the mixed solution is removed, and the additive element present as an alkoxide reacts with the primary particles of the lithium composite oxide on the plate surface and the open pores of the additive-free sintered body plate. As a result, as in the same with the first embodiment, the additive-added sintered body plate containing an additive element on the surface of the primary particles constituting the plate surface and the surface for defining the open pores, which is a porous body satisfying the above-mentioned various requirements, can be obtained.

### [Examples]

### (Example 1)

LiCoO₂ (hereinafter, also referred to as LCO) was selected as the lithium composite oxide, and Nb was selected as the additive element to produce the additive-added sintered body plate according to the first embodiment, and various evaluations were conducted.

### <Production of Sintered Body Plate>

First, Co₃O₄ powder (product of SEIDO CHEMICAL INDUSTRY CO., LTD.) and Li₂CO₃ powder (product of The Honjo Chemical Corporation) were weighed so as to have Li/Co: 1.02, mixed, and then held at 800°C for 5 hours.

Nb₂O₅ (product of MITSUI MINING & SMELTING CO.,LTD.) was added to the obtained mixed powder, and the mixture was pulverized in a pot mill until a particle size distribution where a volume-based D50 was 0.8 µm was obtained. The addition amount was 0.03 wt%. From the atomic weight ratio of the constituent elements of Nb₂O₅, about 70% of the added Nb₂O₅ corresponds to the addition amount of Nb as an element. Therefore, the addition amount of Nb is 0.021 wt%. A Microtrack MT3000II (MicrotracBEL Corp.) was used to evaluate the particle size distribution.

A slurry was produced by mixing 100 parts by weight of the powder obtained by pulverization, 32 parts by weight of a dispersion medium (2-Ethylhexanol), 8 parts by weight of a binder (Product number BLS, product of SEKISUI CHEMICAL CO., LTD.), 3.2 parts by weight of a plasticizer (DOP: di phthalate (2-ethylhexy), product of KUROGANE KASEI Co., Ltd.), and 2.5 parts by weight of a dispersant (Product number Marialim SC0505K, product of NOF CORPORATION.) using a three-roll mill and a rotating and revolving mixer. Further, the produced slurry was formed into a sheet on a PET film by the doctor blade method to produce a green sheet having a thickness of about 105 µm.

Next, the produced green sheet was cut into 68 mm squares, and then, by applying a firing profile of heating to 900°C at a heating rate of 100°C/h on a setter, and then holding at 900°C for 15 hours, an LCO sintered body plate as an additive-added sintered body plate was obtained. The thickness thereof was 100 µm.

### <XRD Measurement

The LCO sintered body plate produced through the above procedure was subjected to θ/2θ measurement using an XRD apparatus (TTR3: product of Rigaku Corporation). The range of the angle 2θ was 15° to 50°, and the scan speed was 0.5°/min.

### <Measurement of Specific Surface Area>

In addition, the produced LCO sintered body plate was dried in a reduced pressure atmosphere at 240°C for 1 hour, and then the specific surface area was measured by the multipoint method (BET method) using a specific surface area meter (3Flex, product of Shimadzu Corporation.). Kr (Krypton) was used as the introduction gas.

### <Production of Symmetrical Cell for Evaluation>

Further, the produced LCO sintered body plate was cut out into circles each having a diameter of 13 mm by laser processing to obtain a plurality of disks used as positive electrode plates. For each positive electrode plate, an integrated body was produced by arranging a positive electrode, a separator, and a negative electrode made of carbon in this order, then the inside of the integrated body was filled with an electrolytic solution in an HS cell (product of Hohsen), and the integrated body was charged to 4.3 V.

After charging, each integrated body was disassembled in an inert gas, and the positive electrode plate was taken out. Using two of the taken-out positive electrode plates, an integrated body was produced in which the positive electrode, the separator, and the positive electrode were rearranged in this order. The obtained integrated body was allowed to stand inside the coin battery exterior (case), the case was filled with an electrolytic solution, and then swaged to produce a symmetric cell for specifying the reaction resistance. As the electrolytic solution, a solution was used in which ethylene carbonate (EC) and ethyl methyl carbonate were mixed in a volume ratio of 7:3, and LiPF6 was dissolved in a solvent containing 2 wt% of vinylene carbonate (VC) at a concentration of 1 mol/L.

### <Determination of Reaction resistance>

Then, in order to determine the reaction resistance of the LCO sintered body plate that constitutes the produced symmetric cell, impedance measurement was performed by the AC impedance method in a thermostatic bath at 25°C using an impedance analyzer (product of Biologic), and a Cole-Cole plot was produced. Half of the size of the semicircular part (arc part) on the real axis in the obtained Cole-Cole plot was determined as the reaction resistance of the LCO sintered body plate constituting the positive electrode.

### <Determination of Gas Generation Rate>

On the other hand, in order to evaluate the gas generation rate in the LCO sintered body plate, two other positive electrode plates taken out from the integrated body after charging are sealed with a laminate film together with the same electrolytic solution as in the above-mentioned production of the symmetric cell, and then the integrated body was held in the atmosphere at 60°C. Then, the volume of the laminated film was repeatedly measured by the Archimedes method while taking an appropriate interval.

Then, a graph (gas generation amount profile) with the horizontal axis representing the square root of the elapsed days and the vertical axis representing the gas generation amount was prepared, and the slope of the approximate straight line in the graph in the range of 10 to 30 days was obtained by least squares method. The value of the slope obtained thereby was determined as the gas generation rate. The reason why the gas generation rate is defined as described above is that the gas generation rate after the 10th day is crucial because another degassing and sealing are performed in lithium secondary batteries that are actually manufactured and used.

### (Examples 2 to 5)

LCO sintered body plates were produced in the same procedure as in Example 1 except that the addition amounts of Nb₂O₅ to the mixed powder of Co₃O₄ powder and Li₂CO₃ powder were 0.27 wt%, 0.68 wt%, 1.36 wt%, and 1.90 wt, respectively. The LCO sintered body plates were measured and evaluated in the same manner as in Example 1. The addition amount of Nb as an element in each Example is, successively, 0.19 wt%, 0.48 wt%, 0.95 wt%, and 1.33 wt%.

### (Example 6)

An LCO sintered body plate was produced in the same procedure as in Example 1 except that the addition amount of Nb₂O₅ to the mixed powder of Co₃O₄ powder and Li₂CO₃ powder was 0.68 wt% and the mixture was pulverized in a pot mill until a particle size distribution where a volume-based D50 was 0.6 µm was obtained. The LCO sintered body plate was measured and evaluated in the same manner as in Example 1. The addition amount of Nb as an element is 0.48 wt%.

### (Example 7)

The additive-added sintered body plate according to the second embodiment was produced by the sol-gel coating method, and various evaluations were conducted.

Specifically, first, an additive-free sintered body plate was produced with the procedure same as in Example 1, except that a green sheet was produced without adding an additive element, the holding temperature at the firing of the green sheet was set to 780°C and the holding time was set to 40 hours.

Subsequently, as in Example 1, the additive-free sintered body plate was cut into a disk shape having a diameter of 13 mm to form a positive electrode plate, and after weighing, it was immersed in a mixed solution of 2-Ethylhexanol (100 parts by weight), acetylacetone (3 parts by weight), and niobium pentaethoxide (10 parts by weight), and allowed to stand still for 3 minutes.

Then, the positive electrode plate was taken out from the mixed solution, the droplets on the surface were wiped off with a waste cloth, and the positive electrode plate was allowed to stand on a setter and heat-treated at 500°C for 5 hours. As a result, the LCO sintered body plate corresponding to the additive-added sintered body plate according to the second embodiment was obtained. The weight of the obtained LCO sintered body plate was measured, and the ratio of the difference value from the measured value before immersion in the mixed solution to the weight of the LCO sintered body plate was obtained as the weight ratio (coat weight ratio, unit: wt%) of Nb contained in the additive element-containing phase to the entire LCO sintered body plate.

The XRD measurement, the specific surface area measurement, the production of the symmetric cell for evaluation, and the determination of the reaction resistance of the obtained LCO sintered body plate were carried out in the same manner as in Example 1. The determination of gas generation rate was not conducted.

### (Examples 8 and 9)

An additive-added sintered body plate was produced with the procedure same as in Example 7, except that the 10 parts by weight of niobium pentaethoxide contained in the mixed solution for immersing the additive-free sintered body plate was changed to tetra-n-butoxy titanium (10 parts by weight) and tungsten pentaethoxide (5 parts by weight), respectively, and various evaluations were conducted. That is, in Example 8, an additive-added sintered body plate containing titanium (Ti) as an additive element was produced, and in Example 9, an additive-added sintered body plate containing tungsten (W) as an additive element was produced.

### (Comparative Example 1)

An LCO sintered body plate as an additive-free sintered body plate was produced in the same procedure as in Example 1 except that no additive element was added to the mixed powder of Co₃O₄ powder and Li₂CO₃ powder, and the XRD measurement, the specific surface area measurement, the production of evaluation symmetric cell, the determination of reaction resistance, and the determination of gas generation rate were performed.

### (Comparative Example 2)

An LCO sintered body plate was produced in the same procedure as in Example 1 except that the amount of Nb₂O₅ added to the mixed powder of Co₃O₄ powder and Li₂CO₃ powder was 3.4 wt. The addition amount of Nb as an element is 2.38 wt%. The obtained additive-added sintered body plate was insufficient in strength; therefore, the XRD measurement, the specific surface area measurement, the production of a symmetric cell for evaluation, the determination of reaction resistance, and the determination of gas generation rate were unperformable.

### (Example 10)

An LCO sintered body plate was produced in the same procedure as in Example 1, except that Ti was selected as the additive element instead of Nb, and 0.82 wt% of TiO₂ (manufactured by Ishihara Sangyo) was added to the mixed powder of Co₃O₄ powder and Li₂CO₃ powder, and the obtained LCO sintered body plate was measured and evaluated in the same manner as in Example 1. The addition amount of Ti as an element is 0.49 wt%.

### (Comparison between Examples and Comparative Examples)

Table 1 lists the production conditions and the results of various evaluations of the LCO sintered body plates in Examples 1 to 10 and Comparative Examples 1 to 2, respectively. More specifically, Table 1 illustrates the following items.
Nb addition amount of raw material powder (Examples 1 to 6 and Comparative Examples 1 and 2) or Ti addition amount (Example 10);
Firing temperature (holding temperature) and firing time (holding time) of green sheet;
Coat weight ratio and °C (Examples 7 to 9);
Crystal phase other than LCO (sub-crystal phase) detected by XRD measurement;
Intensity ratio of main peak of sub-crystal phase to peak intensity of (003) plane of LCO in XRD peak profile (XRD peak intensity ratio);
Specific surface area of LCO sintered body plate;
Normalized addition amount (Nb addition amount/specific surface area of raw material powder for Examples 1 to 6, Example 10, and Comparative Example 1; coat weight ratio/specific surface area for Examples 7 to 9);
Reaction resistance of the LCO sintered body plate; and
Gas generation rate from LCO sintered body plate.

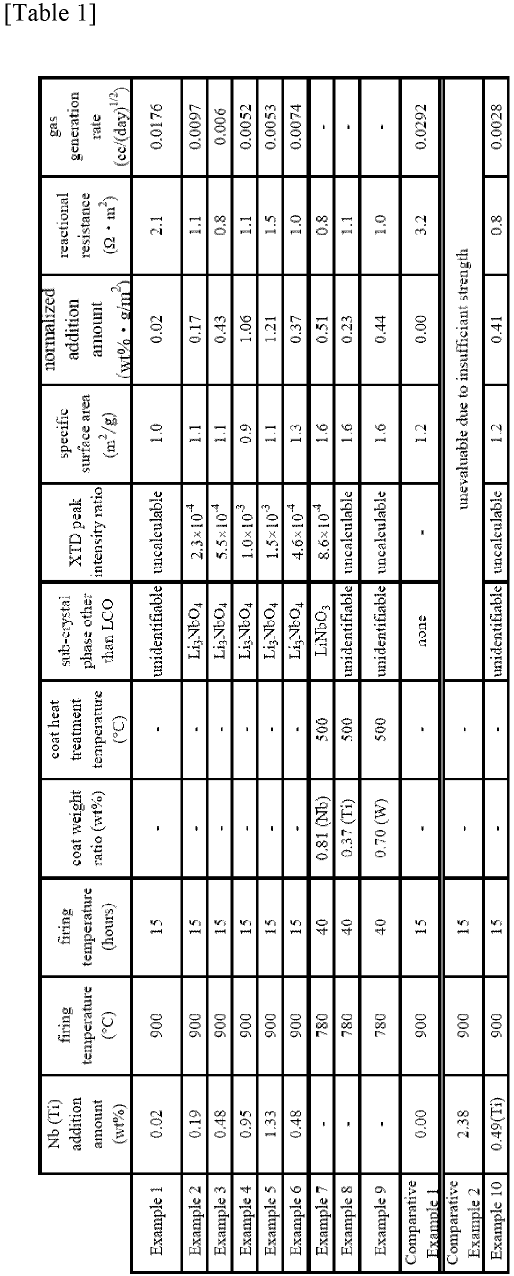

As shown in Table 1, in Examples 1 to 6 in which Nb was added in a weight ratio of 0.02 wt% or more and 1.33 wt% or less in the mixing stage of the raw material powder, the reaction resistance was reduced to about 2/3 or less compared to Comparative Example 1 in which no addition was added. The same was true for Example 10 in which Ti was added in a weight ratio of 0.49 wt%.

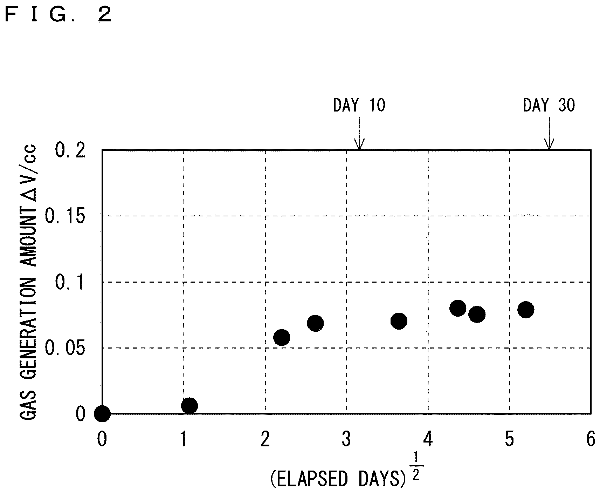

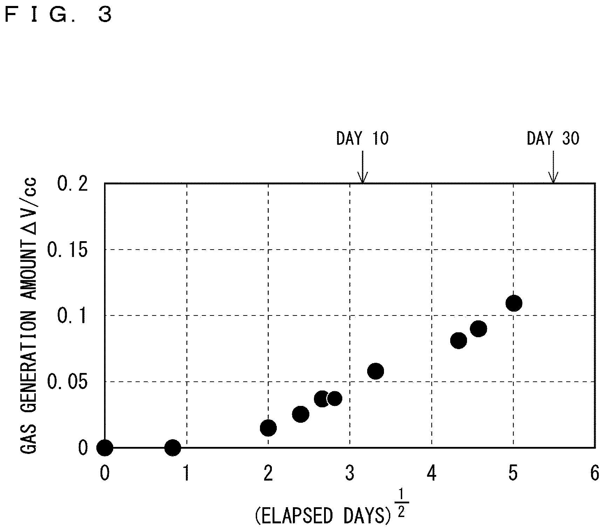

The gas generation rate was also less than 2/3 of that of Comparative Example 1. FIG. 2 is a graph illustrating a gas generation amount profile for Example 3 and FIG. 3 is a graph illustrating a gas generation amount profile for Comparative Example 1. Comparing the two for the elapsed days between 10 and 30 days, tendencies were confirmed that the amount of gas generated amount was almost flat in the former and the amount of gas generated amount monotonically increases in the latter. In the other Examples, the increase was gradual as compared with the latter. These differences appear as differences in gas generation rates in Table 1.

In Comparative Example 2 in which the addition amount of Nb was further increased from that of Examples 1 to 6 to 2.38 wt%, the LCO sintered body plate did not have sufficient strength and the evaluation was unperformable.

In particular, in Examples 2 to 6 in which the addition amount of Nb was 0.15 wt% or more, the reaction resistance was 1/2 or less of that of Comparative Example 2, and the gas generation rate was 1/3 or less. The same was true for Example 10 in which the addition amount of Ti was 0.49 wt%.

The reduction in reaction resistance is considered to be the effect of suppressing the electrical repulsive force generated during the insertion and desorption of lithium ions on the surface of the primary particles of the lithium composite oxide. Further, the reduction of the gas generation rate is considered to be an effect that the electrolytic solution is protected from the high potential of the positive electrode and the oxidative decomposition of the electrolytic solution is suppressed. That is, all of these are considered to be effects derived from the surface structure of the crystal particles (primary particles) of the lithium composite oxide that constitute the plate surface and the surface that defines the open pores in the lithium composite oxide sintered body plate.

It is considered that obtaining such effects in Examples 1 to 6 and Example 10 in which Nb or Ti was added to the raw material powder suggests that the substance containing Nb or Ti contributed to the manifestation of these effects.

In particular, in Examples 2 to 6, Li₃NbO₄ was detected as a sub-crystal phase in addition to the main phase LCO in the XRD measurement, the intensity ratio of the peak at (221) plane of Li₃NbO₄ which is the main peak thereof with respect to the peak at the (003) plane of LCO was positively correlated with the addition amount of Nb in the raw material powder.

As described above, it is considered that detection of Li₃NbO₄ in Examples 2 to 6 in which the addition amount of Nb was large suggests that Nb is present on the surface (or covers at least a portion on the surface) of the primary particles of the LCO mainly as a crystal phase of Li₃NbO₄. Although Li₃NbO₄ was not clearly identified in Example 1 in which the addition amount of Nb was small, in view of the results of Examples 2 to 6, it was determined that the probability that Li₃NbO₄ was also present on the surface of the primary particles of the LCO in Example 1 is high.

Further, for the LCO sintered body plates of Examples 7 to 9 in which Nb, Ti, and W were added to each of the additive-free LCO sintered body plates by sol-gel coating, the value of the reaction resistance was smaller than that of the comparative example of the additive-free LCO sintered body plate, the same as in Examples 1 to 6.

In the case of Examples 7 to 9, it is considered that, by adopting the sol-gel coating, the substance containing the additive element is unevenly distributed on the primary particles constituting the LCO sintered body plate more than that of Examples 1 to 6 and Example 10 in which Nb or Ti is added to the raw material powder, and, as a result of such uneven distribution, the reaction resistance is reduced. Although the gas generation rate is not evaluated, the reduction thereof is also expected.

In Example 7, LiNbO₃ was detected as a sub-crystal phase in addition to LCO by the XRD measurement (more specifically, the peak at the (012) plane, which is the main peak, was detected). On the other hand, in Example 8 and Example 9, no peak sufficient to identify the sub-crystal phase was detected. However, observing a difference in the structure of the sub-crystal phase containing Nb at least between Examples 2 to 6 and Example 7 despite those Examples commonly containing Nb does not suggest that the effects of reducing the reaction resistance and the gas generation rate are obtained only when the additive element is contained in a specific crystal phase such as Li₃NbO₄ or LiNbO₃, but suggests that it can exist as various substances in accordance with the production method for the additive-added sintered body plate.

### (Evaluation Based on Normalized Addition Amount)

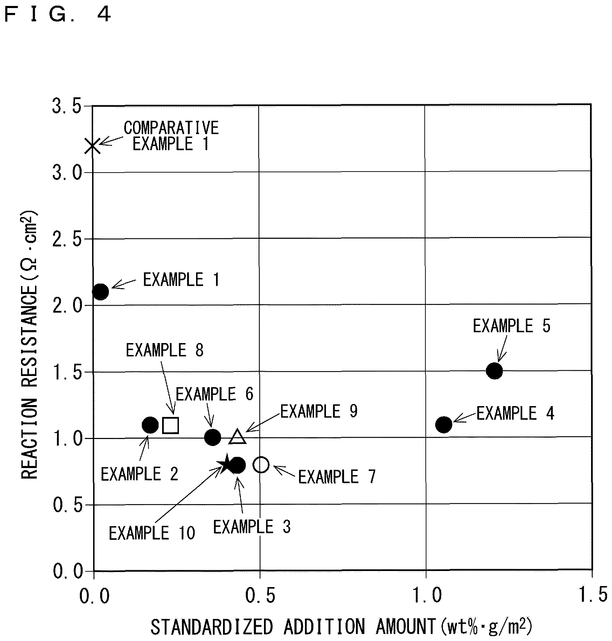

Meanwhile, FIG. 4 is a graph illustrating plotting of reaction resistance with respect to normalized addition amounts for LiCoO₂ sintered body plates of Examples 1 to 10 and Comparative Example 1.

Based on FIG. 4 and Table 1, in Examples 1 to 10 in which the normalized addition amount is 0.02 wt%·g/m² or more and 1.5 wt%·g/m² or less, it can be said that the reaction resistance was reduced to about 2/3 or less compared to addition-free Comparative Example 1, and the gas generation rate was also 2/3 or less of that of Comparative Example 1.

Moreover, in Examples 2 to 6 in which the normalized addition amount was 0.15 wt%·g/m² or more, it can be said that the reaction resistance was 1/2 or less and the gas generation rate was 1/3 or less.

## Claims

1. A lithium composite oxide sintered body plate used for a positive electrode of a lithium secondary battery, comprising:
a porous structure in which a plurality of primary particles of a lithium composite oxide having a layered rock-salt structure are bonded, wherein
a porosity is 15 to 50%,
a ratio of said primary particles whose inclination angle between a (003) plane of said plurality of primary particles and a plate surface of said lithium composite oxide sintered body plate is more than 0° and 30° or less is 60%,
one or more additive elements selected from Nb, Ti, W are contained, and
an addition amount of said one or more additive elements to an entire of said lithium composite oxide sintered body plate is 0.01 wt% or more and 2.0 wt% or less.

2. The lithium composite oxide sintered body plate according to claim 1, wherein
a normalized addition amount being a ratio of said addition amount of said one or more additive elements to a specific surface area of said lithium composite oxide sintered body plate, is more than 0 wt%·g/m² and 1.5 wt%·g/m² or less.

3. The lithium composite oxide sintered body plate according to claim 1 or 2, wherein
there exists a crystal phase containing said one or more additive elements and having lower electron conductivity than that of said composite oxide while having lithium ion conductivity, in at least a part of a surface of said primary particles constituting said plate surface and a surface for defining open pores of said lithium composite oxide sintered body plate.

4. The lithium composite oxide sintered body plate according to claim 1 or 2, wherein
there exists a crystal phase containing said additive element and having lower electron conductivity than that of said composite oxide while having lithium ion conductivity, in at least a part of a surface of said primary particles, said surface of said primary particles constituting a contact surface of said lithium composite oxide sintered body plate with an electrolytic solution when said lithium composite oxide sintered body plate is used as said positive electrode of said lithium secondary battery.

5. The lithium composite oxide sintered body plate according to any one of claims 1 to 4, wherein
the additive element is Nb, and the lithium composite oxide is LiCoO₂.

6. The lithium composite oxide sintered body plate according to any one of claims 1 to 4, wherein
the additive element is Ti, and the lithium composite oxide is LiCoO₂.
